# EUROPEAN PATENT APPLICATION

(11) **EP 4 757 043 A1**
(43) Date of publication of application: **10.06.2026**
(21) Application number: 25217299.4
(22) Date of filing: 20.11.2025
(51) Int. Cl.: H01M 50/471

(54) **POWER STORAGE DEVICE AND METHOD FOR FABRICATING POWER STORAGE DEVICE**

(30) Priority: 05.12.2024 JP 2024212441
(71) Applicant: Prime Planet Energy & Solutions, Inc., Tokyo 103-0022 (JP)
(72) Inventor: FUKUNAGA, Masao, Tokyo,, 103-0022, (JP); TSUKAMOTO, Kentaro, Tokyo,, 103-0022, (JP); MIZONOBE, Yukihiro, Tokyo,, 103-0022, (JP); MAGARI, Yoshifumi, Tokyo,, 103-0022, (JP)
(74) Representative: Kuhnen & Wacker Patent- und Rechtsanwaltsbüro PartG mbB

(57) **Abstract**

An aspect of a fabrication method disclosed here includes a preparation step S1 of preparing a battery assembly (2) and an injection step S2 of injecting an electrolyte (E) into the battery assembly (2). In the injection step S2, the electrolyte (E) is injected from a liquid inlet (120A) inserted into an injection hole (22) in a state where the battery assembly (2) is placed with a sealing plate (20A) having the injection hole (22) facing upward.

## Description

### BACKGROUND

The present disclosure relates to a power storage device and a method for fabricating a power storage device.

Japanese Patent Application Publication No. 2011-076952 discloses a sealed battery that includes an outer can, an electrode group housed in the outer can and including a positive electrode and a negative electrode, a battery sealing member attached to an opening of the outer can, a safety valve located on the battery sealing member or the outer can, and a spacer located at a position in contact with the electrode group. The publication describes a feature in which the spacer has a flat portion in a surface in contact with the electrode group, and the flat portion includes a plurality of conduits.

### SUMMARY

In the case of increasing the size of a battery mounted on a vehicle to increase the battery capacity, the amount of an electrolyte to be injected increases. Especially for large batteries, to complete injection of the electrolyte within a predetermined time, it is necessary to increase the amount of injection per unit time.

A method for fabricating a power storage device disclosed here includes a preparation step of preparing a power storage device assembly and an injection step of injecting an electrolyte into the power storage device assembly. The power storage device assembly includes a case, an electrode body housed in the case, and a spacer. The case includes a housing space housing the electrode body, and a side wall having an injection hole through which the electrolyte is injected. The electrode body has a multilayer structure in which a sheet-like positive electrode and a sheet-like negative electrode are stacked with a sheet-like separator interposed therebetween. An end surface of the multilayer structure faces the side wall in the housing space. The spacer is located between the side wall and the electrode body in the case, and includes a partition wall facing the side wall and partitioning the housing space from an end space on a side of the side wall. The partition wall includes a plurality of openings each penetrating the partition wall. A proportion of a total area of the plurality of openings to an area of the injection hole (total area of openings /area of injection hole) is 22 or more and 49 or less. Supposing an area of a cross section of the case along the side wall is 100%, the proportion of the total area of the plurality of openings is 8 % or more. Supposing the area of the cross section of the case along the side wall is 100%, a proportion of the area of the injection hole is 0.2 % or more. In the injection step, the electrolyte is injected from a liquid inlet inserted into the injection hole in a state where the power storage device assembly is placed with the side wall having the injection hole facing upward. This configuration can suppress peeling of the sheet-like separator even when the amount of injection per unit time increases, for example. This configuration can reduce the injection time of the electrolyte.

A power storage device disclosed here includes: an electrode body; an electrolyte; a case housing the electrode body and the electrolyte; and a spacer. The case includes a housing space housing the electrode body, and a side wall having an injection hole through which the electrolyte is injected. The electrode body has a multilayer structure in which a sheet-like positive electrode and a sheet-like negative electrode are stacked with a sheet-like separator interposed therebetween. An end surface of the multilayer structure faces the side wall in the housing space. The spacer is located between the side wall and the electrode body in the case, and includes a partition wall facing the side wall and partitioning the housing space from an end space on a side of the side wall. The partition wall includes a plurality of openings each penetrating the partition wall. A proportion of a total area of the plurality of openings to an area of the injection hole (total area of openings /area of injection hole) is 22 or more and 49 or less. Supposing an area of a cross section of the case along the side wall is 100%, the proportion of the total area of the plurality of openings is 8 % or more. Supposing the area of the cross section of the case along the side wall is 100%, a proportion of the area of the injection hole is 0.2 % or more. The power storage device with this configuration is a high-quality power storage device in which peeling of the sheet-like separator is suppressed.

### BRIEF DESCRIPTION OF THE DRAWINGS

FIG. 1 is a perspective view schematically illustrating a battery according to one preferred embodiment.
FIG. 2 is a perspective view of the battery according to the preferred embodiment when seen from a viewpoint different from that in FIG. 1.
FIG. 3 is a cross-sectional view schematically illustrating an internal structure of the battery illustrated in FIG. 1.
FIG. 4 is a perspective view schematically illustrating an electrode body of a battery according to one preferred embodiment.
FIG. 5 is a perspective view schematically illustrating spacers of a battery according to one preferred embodiment.
FIG. 6 is a schematic enlarged cross-sectional view for describing injection of an electrolyte in a battery according to one preferred embodiment.
FIG. 7 is a schematic view for describing a positional relationship between an injection hole and openings according to one preferred embodiment.
FIG. 8 is a schematic view of a sealing plate according to one preferred embodiment when seen from above.
FIG. 9 is a flowchart illustrating a method for fabricating a battery according to one preferred embodiment.
FIG. 10 is a first schematic view for describing an injection step according to one preferred embodiment.
FIG. 11 is a schematic view schematically illustrating a cross section taken along line A-A in FIG. 10.
FIG. 12 is a second schematic view for describing an injection step according to one preferred embodiment.
FIG. 13 is a third schematic view for describing an injection step according to one preferred embodiment.

### DETAILED DESCRIPTION

Some preferred embodiments of the technique disclosed here will be described hereinafter with reference to the drawings. In the drawings, members and parts having the same functions are denoted by the same reference characters as necessary. Dimensional relationships (e.g., length, width, and thickness) in the drawings do not reflect actual dimensional relationships. Matters not specifically mentioned herein but required for carrying out the technique disclosed here (e.g., a general configuration and fabrication process of a power storage device that do not characterize the present disclosure) can be understood as design matter of those skilled in the art based on related art in the field. The technique disclosed here can be carried out on the basis of the contents disclosed herein and common general knowledge in the field. The following description is not intended to limit the present disclosure to the following embodiments.

The expression "A to B" indicating a range herein means "A or more and B or less." In addition, the expression "A to B" is understood to include the meaning of "exceeding A" and "less than B." A "power storage device" herein refers to a device capable of being charged and discharged. The power storage device includes batteries such as a primary battery and a secondary battery (e.g., nonaqueous electrolyte secondary battery such as a lithium ion secondary battery, and a nickel hydrogen battery), and a capacitor (physical cell) such as an electric double layer capacitor. Furthermore, the "power storage device assembly" refers to a structure in which the constituent materials of the power storage device are mechanically assembled appropriately, and denotes a structure in a state before undergoing electrochemical activation treatments such as an initial charging treatment. A lithium ion secondary battery (hereinafter referred to simply as a "battery"), which is one preferred embodiment of a power storage device disclosed here, will be described as an example. The following description is not intended to limit the power storage device to a lithium ion secondary battery.

### <Battery Configuration>

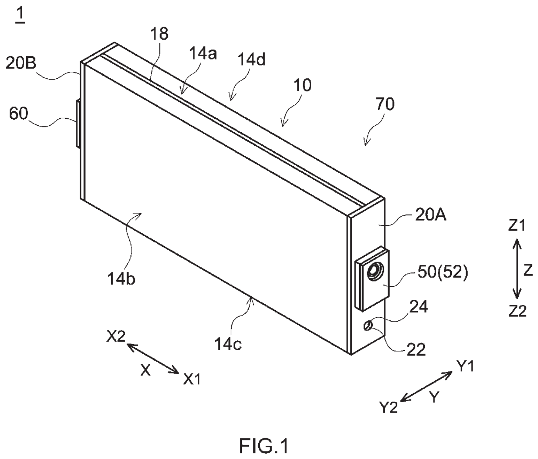

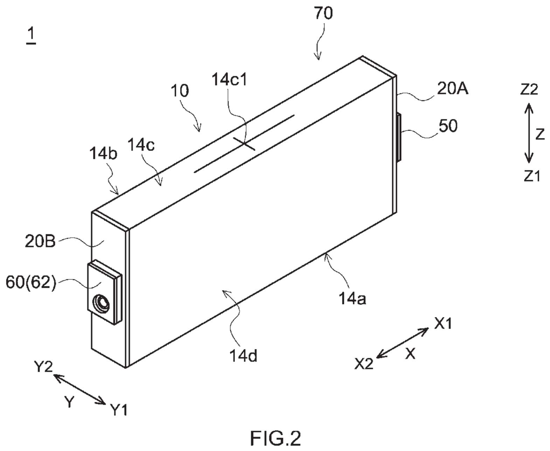

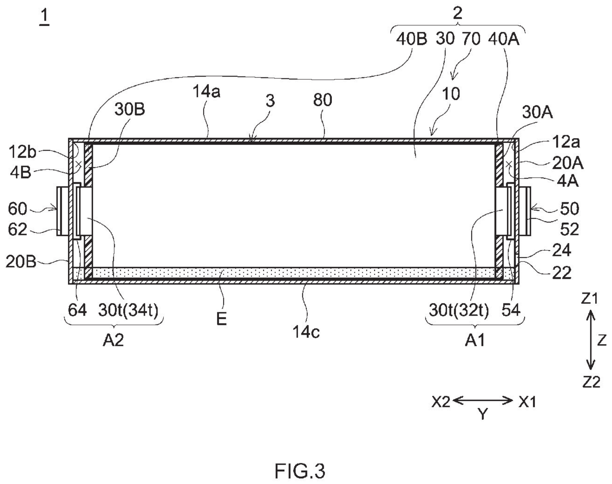

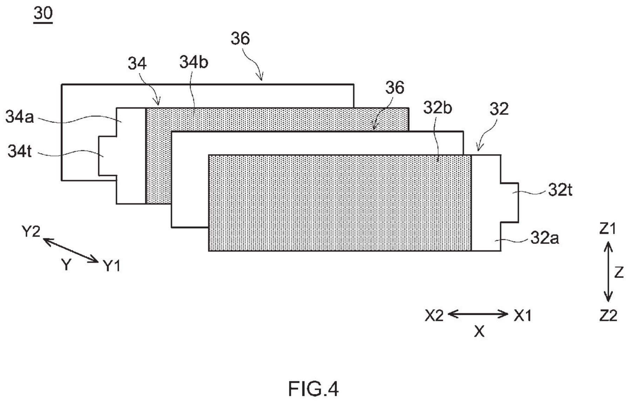

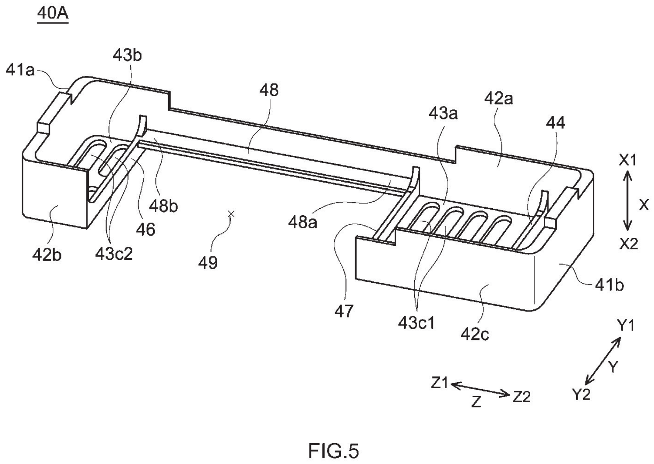

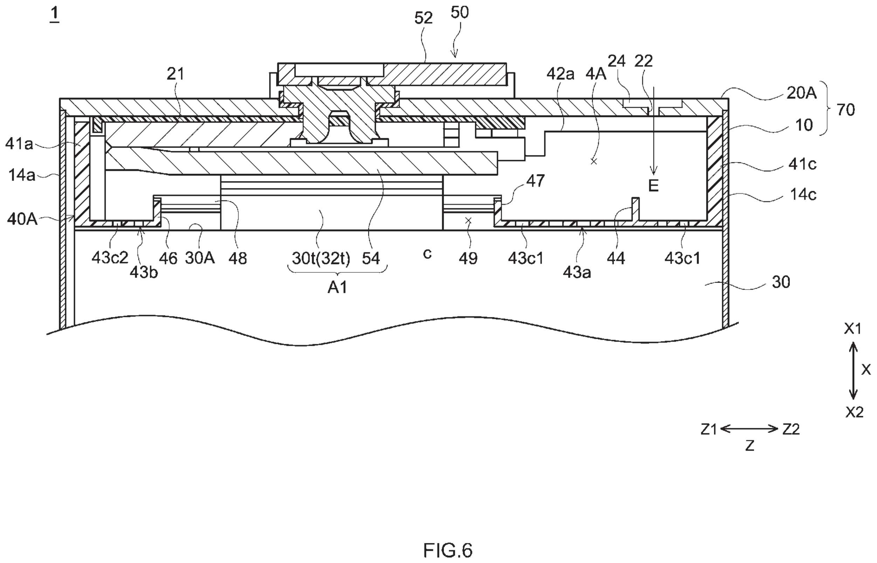

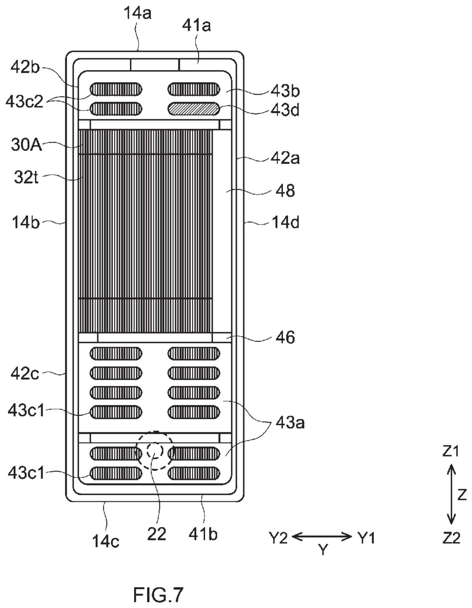

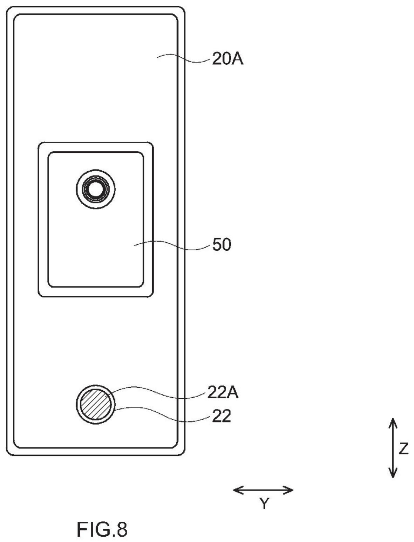

A battery 1 according to this preferred embodiment will be described hereinafter. The battery 1 is a battery obtained by a method for fabricating the battery 1 described later. FIG. 1 is a perspective view schematically illustrating the battery 1 according to one preferred embodiment. FIG. 2 is a perspective view of the battery 1 according to one preferred embodiment when seen from a viewpoint different from that in FIG. 1. FIG. 3 is a cross-sectional view schematically illustrating an internal structure of the battery 1 illustrated in FIG. 1. FIG. 4 is a perspective view schematically illustrating an electrode body 30 of the battery 1 according to one preferred embodiment. FIG. 4 shows only a portion of a positive electrode 32, a negative electrode 34, and a separator 36 included in the electrode body 30 for clarity. FIG. 5 is a perspective view schematically illustrating a spacer 40A of the battery 1 according to one preferred embodiment. FIG. 6 is a schematic enlarged cross-sectional view for describing injection of an electrolyte E in the battery 1 according to one preferred embodiment. FIG. 7 is a schematic view for describing a positional relationship between an injection hole 22 and openings 43c1 and 43c2 according to one preferred embodiment. FIG. 7 does not show a sealing plate 20A and a positive electrode terminal 50 for clarity. FIG. 8 is a schematic view of a sealing plate according to one preferred embodiment when seen from above.

Characters X, Y, and Z in the drawings respectively represent a long-side direction, a short-side direction, and a height direction of the battery 1. Characters X, Y, and Z in the drawings may also be referred to as a first direction, a second direction, and a third direction, respectively. However, these directions are defined for convenience of description. The installation mode of the battery 1 is not limited by these directions. The following description is directed to a case where a side wall is a sealing plate 20A, but is not intended to limit the present disclosure to this aspect.

As illustrated in FIGS. 1 through 3, the battery 1 according to this preferred embodiment includes the electrode body 30, the electrolyte E, a case 70, and the spacers 40A and 40B.

As illustrated in FIG. 3, the case 70 is a member housing the electrode body 30 and the electrolyte E. The case 70 includes a housing space 3 housing the electrode body 30, and the sealing plate 20A having an injection hole 22 through which the electrolyte E is injected. In the example illustrated in FIG. 3, the case 70 is a substantially rectangular parallelepiped flat square container. The case 70 includes a case body 10 and the sealing plates 20A and 20B.

The case body 10 is a flat rectangular tubular member having a pair of substantially rectangular openings 12a and 12b (see FIG. 3) at both ends in the long-side direction X. The case body 10 includes the housing space 3 with a predetermined length along the long-side direction X. In the example illustrated in FIGS. 1 and 2, the case body 10 includes a pair of first side walls 14a and 14c facing each other in the height direction Z, and a pair of second side walls 14b and 14d facing each other in the short-side direction Y. The first side walls 14a and 14c and the second side walls 14b and 14d are continuous circumferentially to surround the housing space 3. The case body 10 can be shaped into a cylindrical shape by, for example, bending a single metal plate and joining (e.g., welding) the seam. In the example illustrated in FIG. 1, the case body 10 includes a joint 18 welded to one first side wall 14a in the height direction Z and extending along the long-side direction X. In the example illustrated in FIG. 2, the other first side wall 14c in the height direction Z includes a thin portion 14c1. The thin portion 14c1 is a portion serving as a safety valve that is opened when the internal pressure of the housing space 3 becomes excessively high. A material constituting the case body 10 is preferably a metal material such as aluminum, an aluminum alloy, iron, or an iron alloy.

As illustrated in FIG. 3, the sealing plates 20A and 20B are a pair of substantially rectangular plate-shaped members covering the pair of openings 12a and 12b of the case body 10. In this preferred embodiment, the openings 12a and 12b at both sides of the case body 10 are sealed by the sealing plates 20A and 20B, thereby constructing the case 70. The pair of sealing plates 20A and 20B face each other in the long-side direction X. In this example, the sealing plate 20A is attached to the opening 12a of the case body 10 on one side X1 in the long-side direction X. The sealing plate 20B is attached to the opening 12b of the case body 12b on the other side X2 in the long-side direction X. The sealing plate 20A includes a positive electrode terminal 50, the injection hole 22, and a sealing plug 24. The sealing plate 20B includes a negative electrode terminal 60. A material constituting each of the sealing plates 20A and 20B is preferably a metal material (e.g., aluminum, aluminum alloy, iron, iron ally) of a type similar to that of the case body 10.

The positive electrode terminal 50 is preferably made of a metal, more preferably made of aluminum or an aluminum alloy, for example. As illustrated in FIG. 3, the positive electrode terminal 50 is located at an center portion in the facing direction (height direction Z) of the first side wall 14a of the case body 10. The positive electrode terminal 50 includes a positive electrode outer terminal 52 and a positive electrode inner terminal 54. The positive electrode outer terminal 52 penetrates the sealing plate 20A to be exposed to the outside of the case 70. The positive electrode inner terminal 54 is housed in the case 70. The positive electrode inner terminal 54 is connected to an electrode tab 30t (positive electrode tab 32t) of the electrode body 30. Components constituting a conductive path from the electrode body 30 in the case 70 to an outer terminal outside the case 70 will be herein collectively referred to as "inner conductive members." In the battery 1 according to this preferred embodiment, a positive electrode inner conductive member A1 is constituted by the positive electrode inner terminal 54 and the positive electrode tab 32t. As illustrated in FIG. 6, an insulating member 21 is disposed to insulate the positive electrode terminal 50 and the sealing plate 20A from each other. The insulating member 21 can be made of a material for a known insulating member used in the battery 1 of this type.

The negative electrode terminal 60 is preferably made of a metal, more preferably made of copper or a copper alloy, for example. As illustrated in FIG. 3, the negative electrode terminal 60 is located at a center portion in the facing direction (height direction Z) of the first side wall 14a of the case body 10. The negative electrode terminal 60 includes a negative electrode outer terminal 62 and a negative electrode inner terminal 64. The negative electrode outer terminal 62 penetrates the sealing plate 20B to be exposed to the outside of the case 70. The negative electrode inner terminal 64 is housed in the case 70. The negative electrode inner terminal 64 is connected to an electrode tab 30t (negative electrode tab 34t) of the electrode body 30. In the battery 1 according to this preferred embodiment, a negative electrode inner conductive member A2 is constituted by the negative electrode inner terminal 64 and the negative electrode tab 34t.

As illustrated in FIG. 6, the injection hole 22 is an opening penetrating the sealing plate 20A. The injection hole 22 is a hole for injecting the electrolyte E (see FIG. 3) into the case 70. In this preferred embodiment, the injection hole 22 is displaced from the positive electrode terminal 50 in the height direction Z in order to avoid interference with the positive electrode terminal 50. After the injection of the electrolyte E into the case 70, the injection hole 22 is sealed by the sealing plug 24.

The electrode body 30 is a power generation element in the battery 1. As illustrated in FIG. 3, the electrode body 30 is housed in the case 70. Specifically, the electrode body 30 is located at a center portion in the long-side direction X to be located between the pair of sealing plates 20A and 20B. In the electrode body 30 according to this preferred embodiment includes a sheet-like positive electrode 32, a sheet-like negative electrode 34, and a sheet-like separator 36 (see FIG. 4). Although not particularly limited, the "sheet-like" can mean that the thickness is within the range from 1 µm to 200 µm (preferably, 1 µm to 100 µm).

As illustrated in FIG. 4, the positive electrode 32 includes a positive electrode current collector 32a that is a conductive metal foil, and a positive electrode active material layer 32b applied to a surface of the positive electrode current collector 32a. The positive electrode tab 32t at which the positive electrode current collector 32a is exposed is located at a side edge portion of the positive electrode 32 on one side X1 in long-side direction X. The positive electrode current collector 32a is substantially rectangular in this example. The positive electrode current collector 32a is made of, for example, a conductive metal such as aluminum, an aluminum alloy, nickel, or stainless steel. The positive electrode current collector 32a is a metal foil, specifically, an aluminum foil. The positive electrode active material layer 32b includes a positive electrode active material capable of reversibly absorbing and desorbing charge carriers. As the positive electrode active material, an oxide containing at least one of Ni, Co, or Mn is preferably used. Examples of the positive electrode active material include lithium transition metal composite oxides such as lithium cobaltate, lithium manganate, lithium nickelate, a lithium nickel manganese composite oxide, and a lithium nickel cobalt composite oxide. The positive electrode active material is, for example, a composite oxide containing Ni and Li, preferably includes a lithium nickel composite oxide in which the Ni content in the composite oxide is in the range from 70 mol% to 100 mol% with respect to the total mole number of constituent elements excluding Li and oxygen in the composite oxide. Examples of the positive electrode active material also include materials in which a part of Ni, Co, and Mn is substituted by, for example, Al, Ti, Zr, P, B, Si, Nb, and C, and materials in which the particle surface is covered with compounds containing, for example, Al, Ti, Zr, W, P, B, Si, Nb, and C. The replacement amount and the additive amount are approximately 0.1 mol% to 7 mol% in total.

On the other hand, the negative electrode 34 is an electrode facing the positive electrode 32. The negative electrode 34 includes a negative electrode current collector 34a that is a conductive metal foil, and a negative electrode active material layer 34b applied to a surface of the negative electrode current collector 34a. The negative electrode tab 34t at which the negative electrode current collector 34a is exposed is located at a side edge portion of the negative electrode 34 on the other side X2 in the long-side direction X. The negative electrode current collector 34a is substantially rectangular in this example. The negative electrode current collector 34a is made of a conductive metal such as copper, a copper alloy, nickel, or stainless steel, for example. The negative electrode current collector 34a is a metal foil, specifically a copper foil in this example. The negative electrode active material layer 34b is located on the negative electrode current collector 34a. The negative electrode active material layer 34b includes a negative electrode active material capable of reversibly absorbing and desorbing charge carriers. Examples of the negative electrode active material include carbon materials such as graphite and carbon, and metals that can absorb lithium, such as Si, SiO, SiC, and Sn, and compounds of such metals.

The separator 36 is an insulating sheet interposed between the positive electrode 32 and the negative electrode 34. The separator 36 is substantially rectangular in this example. The separator 36 is preferably a porous resin sheet made of a polyolefin resin such as polyethylene (PE) or polypropylene (PP), for example. A heat resistance layer (HRL) including an inorganic filler may be located on a surface of the separator 36. Examples of the inorganic filler include alumina, boehmite, aluminum hydroxide, and titania.

The electrode body 30 according to this preferred embodiment is a laminated electrode body. The shape of the electrode body 30 is a flat substantially rectangular parallelepiped in this example. The electrode body 30 herein has a pair of substantially rectangular wide surfaces in this example. The electrode body 30 has a multilayer structure in which sheet-like positive electrodes 32 and sheet-like negative electrodes 34 are stacked with sheet-like separators 36 interposed therebetween. As illustrated in FIG. 3, both end surfaces of the electrode body 30 in the long-side direction X include a pair of end surfaces 30A and 30B at which the sheet-like positive electrodes 32, the sheet-like negative electrodes 34, and the sheet-like separators 36 are exposed to the outside. The end surfaces 30A and 30B are end surfaces having the multilayer structure of the electrode body 30 (laminated surfaces). The end surface 30A is located in the hosing space 3 to face the sealing plate 20A. The end surface 30B is located in the housing space 3 to face the sealing plate 20B.

As illustrated in FIG. 6, the end surface 30A is located to face the injection hole 22 of the sealing plate 20A when the electrode body 30 is housed in the case 70. The end surface 30A is located to face partition walls 43a and 43b of the spacer 40A described later.

The size of the electrode body 30 is not particularly limited as long as advantages of the technique disclosed here are obtained. For example, in a case where the electrode body 30 has a pair of rectangular wide surfaces as described in this preferred embodiment, the length of the electrode body 30 in the long-side direction X is, for example, 10 cm or more, 15 cm or more, and from the viewpoint of suitability as an application target of the technique disclosed here, is preferably 20 cm or more, more preferably 25 cm or more (e.g., 28 cm or more). The upper limit of the length of the electrode body 30 in the long-side direction X is, for example, 50 cm or less, may be 40 cm or less or 30 cm or less.

As illustrated in FIG. 3, the electrode body 30 is covered with an insulating film 80. The shape of the insulating film 80 may be tubular as in this preferred embodiment, and may be a box shape or a bag shape in other preferred embodiments. Examples of a material constituting the insulating film 80 include polyolefin resins such as polyethylene (PE) and polypropylene (PP).

As illustrated in FIG. 3, the electrolyte E is housed in the case 70. The type of the electrolyte E may be similar to that in a typical secondary battery and is not particularly limited. The electrolyte E is typically a nonaqueous liquid electrolyte (nonaqueous electrolyte) including a nonaqueous solvent and a supporting electrolyte. The nonaqueous solvent includes carbonates such as ethylene carbonate (EC), ethyl methyl carbonate (EMC), and dimethyl carbonate (DMC), for example. As the nonaqueous solvent, EC, EMC, and DMC each in a proportion range from 1% to 99% are preferably mixed such that the total ratio by volume is 100%. The supporting electrolyte is, for example, a fluorine-containing lithium salt. The fluorine-containing lithium salt preferably contains lithium hexafluorophosphate (LiPF₆), lithium bis (fluorosulfonyl) imide (F₂LiNO₄S₂) called LiFSI, or a mixture thereof. The concentration of the supporting electrolyte is preferably 0.6 mol to 1.8 mol per 1 L of the nonaqueous solvent.

The electrolyte E has infiltrated into the electrode body 30 in this example. As in this preferred embodiment, a portion of the electrolyte E may be present outside the electrode body 30 (specifically, between the electrode body 30 and the case 70) as an excess electrolyte. Alternatively, in another preferred embodiment, the electrolyte E may not be present outside the electrode body 30 as an excess electrolyte. However, the former case is preferable because the electrode body 30 can be easily replenished with the electrolyte E when there is a shortage of the electrolyte E in the electrode body 30.

For the amount of the electrolyte E, description in "the amount of the electrolyte" in the method for fabricating the battery 1 described later can be referred to. As described later, in a preferred aspect, the amount of the electrolyte E is 200 g or more. For example, large batteries with an electrolyte amount of 200 g or more are suitable as application targets of the technique disclosed here.

As illustrated in FIG. 3, the spacer 40A is located between the sealing plate 20A having the injection hole 22 for injecting the electrolyte E, and the electrode body 30, in the case 70. The spacer 40B is located between the sealing plate 20B and the electrode body 30 in the case 70. In this preferred embodiment, the spacers 40A and 40B are located at both sides of the electrode body 30 in the case 70, but in another preferred embodiment, the spacer 40A may be located only in a space between the sealing plate 20A having the injection hole 22 and the electrode body 30 in the case 70.

As a material constituting the spacer 40A, an insulating resin that can be used for general batteries can be used without any particular limitation. Examples of the material constituting the spacer 40A include polyolefin-based resins such as polyethylene (PE) and polypropylene (PP), a polyamide resin, a polyimide resin, a polyacetal resin, and a polyester resin. These materials may contain one type alone or contain two or more types. The spacer 40A can be fabricated by, for example, press work, forging, or casting. The spacer 40B can also be fabricated by a similar method.

The structure of the spacer 40A will be described below. As illustrated in FIGS. 5 and 6, the spacer 40A faces the sealing plate 20A having the injection hole 22 and includes the partition walls 43a and 43b that partition the housing space 3 of the case 70 from an end space 4A on the side of the sealing plate 20A. The partition walls 43a and 43b have a plurality of openings 43c1 and 43c2 that penetrate the partition walls 43a and 43b, respectively. The plurality of openings 43c1 are displaced from a region facing the injection hole 22 in the partition wall 43a.

As illustrated in FIG. 7, in this preferred embodiment, the spacer 40A includes first walls 41a and 41b and second walls 42a, 42b, and 42c along the inner side of the case 70. As illustrated in FIG. 5, a passage space 49 is defined in an intermediate portion of the spacer 40A to allow the positive electrode inner conductive member A1 to pass therethrough.

As illustrated in FIG. 7, the first wall 41a of the spacer 40A is a wall that extends along the inner side of the first side wall 14a of the case 70. The first wall 41b of the spacer 40A is a wall that extends along the inner side of the first side wall 14c of the case 70. The second wall 42a of the spacer 40A is a wall that extends along the inner side of the second side wall 14d of the case 70. The second walls 42b and 42c of the spacer 40A are walls that extend along the inner side of the second side wall 14b of the case 70. The second wall 42b of the spacer 40A is located closer to one side Z1 (toward the first side wall 14a of the case 70) in the height direction Z in the second side wall 14b of the case 70. The second wall 42c of the spacer 40A is located closer to the other side Z2 (toward the first side wall 14c of the case 70) in the height direction Z in the second side wall 14b of the case 70. As illustrated in FIG. 5, the second walls 42b and 42c of the spacer 40A are interrupted in a region where the passage space 49 is defined.

As illustrated in FIG. 5, the spacer 40A includes a first rib 44 that bridges the second walls 42a and 42c in the short-side direction Y. The first rib 44 is a flat plate-shaped member extending from one side Y1 to the other side Y2 in the short-side direction Y. The partition wall 43a is separated by the first rib 44. The spacer 40A also includes a second rib 46 and a third rib 47 extending in the short-side direction Y on both sides of the passage space 49. The second rib 46 and the third rib 47 are flat plate-shaped members. The second rib 46 is located between the second walls 42a and 42b of the spacer 40A that face each other in the short-side direction Y. The third rib 47 is located between the second walls 42a and 42c of the spacer 40A that face each other in the short-side direction Y.

As illustrated in FIG. 5, the spacer 40A includes a liquid channel 48 extending along the second wall 42a of the spacer 40A between the second rib 46 and the third rib 47. The liquid channel 48 is a flat plate-shaped member that projects inward from the second wall 42a. The liquid channel 48 bridges the partition walls 43a and 43b. An end 48a of the flow path 48 on one side Z1 in the height direction Z is connected to the partition wall 43a. An end 48b of the liquid channel 48 on the other side Z2 in the height direction Z is connected to the partition wall 43b.

As described above, the battery 1 according to this preferred embodiment includes the positive electrode inner conductive member A1 (the positive electrode inner terminal 54 and the electrode tab 30t) that defines a conductive path from the electrode body 30 in the case 70 to the outer terminal (the positive electrode outer terminal 52) outside the case 70 (see FIG. 3). The spacer 40A includes the passage space 49 that allows the positive electrode inner conductive member A1 to pass therethrough. Accordingly, even in the case where the spacer 40A is interposed between the sealing plate 20A and the electrode body 30, a conductive path from the electrode body 30 to the positive electrode outer terminal 52 can be easily formed. As illustrated in FIG. 6, a portion of the electrolyte E flows downward in the direction of gravity (to the other side X2 in the long-side direction X) through the passage space 49.

As illustrated in FIG. 5, the partition walls 43a and 43b are supported by the first walls 41a and 41b and the second walls 42a, 42b, and 42c. The partition walls 43a and 43b are flat substantially rectangular plate-shaped members extending along the direction in which the first side walls 14a and 14c face each other (height direction Z) to be interposed between the electrode body 30 and the sealing plate 20A. The partition walls 43a and 43b are portions that partition a space where the electrolyte E is injected from the injection hole 22 from the end surface 30A of the electrode body 30. As illustrated in FIG. 6, the partition walls 43a and 43b face the sealing plate 20A and separate the housing space 3 from the end portion space 4A on the side of the sealing plate 20A. As described above, the spacer 40A includes the passage space 49. Accordingly, the partition walls 43a and 43b are divided in a region including a center portion in the height direction Z. The partition walls 43a and 43b are bridged by the second wall 42a on one side Y1 in the short-side direction Y and the liquid channel 48.

As illustrated in FIG. 5, the spacer 40A has the plurality of openings 43c1 and 43c2 that penetrate the partition walls 43a and 43b. As illustrated in FIG. 6, a portion of the electrolyte E injected into the case 70 flows downward in the direction of gravity (to the other side X2 in the long-side direction X) through the openings 43c1 and 43c2.

The shape of each of the openings 43c1 and 43c2 (the shape of each of the openings 43c1 and 43c2 as viewed from above) is not particularly limited as long as advantages of the technique disclosed here are obtained. The shape of each of the openings 43c1 and 43c2 may be an elliptical shape (oval shape) as in this preferred embodiment, or in other preferred embodiments, may be various shapes such as circular, rectangular, or triangular. From the viewpoint of injecting the electrolyte E more smoothly, the shape of each of the openings 43c1 and 43c2 is preferably a circular or elliptical shape without corners. The shapes of all the plurality of openings 43c1 and 43c2 may be the same as in this preferred embodiment, or in other preferred embodiments, some or all of these openings may be different. For example, the shape of each of the plurality of openings 43c1 may be different from the shape of each of the plurality of openings 43c2. Alternatively, for the plurality of openings 43c1, the shapes of some or all of the openings may be different. For the plurality of openings 43c2, the shapes of some or all of the openings may be different. From the viewpoint of ease of fabricating the spacer 40A, the shapes of the plurality of openings 43c1 and 43c2 are preferably the same.

The number of the openings 43c1 and 43c2 of the spacer 40A (hereinafter referred to simply as "the number of openings") is not particularly limited as long as advantages of the technique disclosed here are obtained. The number of openings is, for example, 5 or more, and from the viewpoint of facilitating uniform supply of the electrolyte E to the electrode body 30, is preferably 10 or more, more preferably 15 or more. Moreover, the upper limit of the number of openings is, for example, 30 or less, and from the viewpoint of suitably ensuring the strength of the spacer 40A, is preferably 25 or less, more preferably 20 or less. In this preferred embodiment, the number of openings is 16.

In the spacer 40A, the proportion of the total area of the plurality of openings 43c1 and 43c2 to the area of the injection hole 22 (total area of openings / area of injection hole) is 22 or more and 49 or less. For details, description in "proportion (total area of openings / area of injection hole)" in the method for fabricating the battery 1 described later can be referred to.

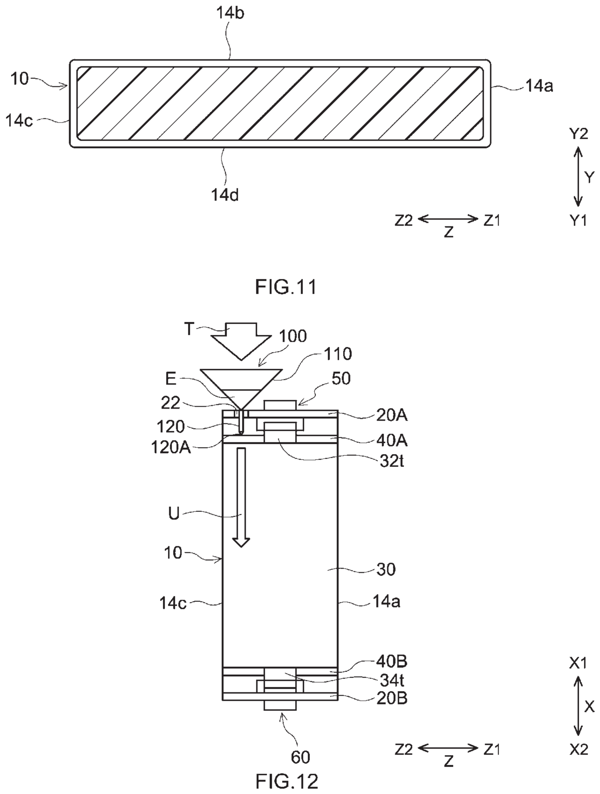

In the spacer 40A, supposing the area of a cross section of the case 70 along the sealing plate 20A (corresponding to the hatched area in FIG. 11) is 100%, the proportion of the total area of the plurality of openings 43c1 and 43c2 is 8% or more. For details, description in the relevant section of the method for fabricating the battery 1 described later can be referred to.

In the spacer 40A, supposing the area of the cross section of the case 70 along the sealing plate 20A is 100%, the proportion of the area of the injection hole 22 (corresponding to the area 22A in FIG. 8) is 0.2% or more. For details, description in the relevant section of the method for fabricating the battery 1 described later can be referred to.

For the total area of the plurality of openings 43c1 and 43c2 of the spacer 40A, description in "total area of openings" in the method for fabricating the battery 1 described later can be referred to. In one preferred aspect, the total area of the plurality of openings 43c1 and 43c2 is 200 mm² or more.

For the area of the injection hole 22 of the sealing plate 20A, description in "area of the injection hole" in the method for fabricating the battery 1 described later can be referred to. In one preferred aspect, the area of the injection hole 22 in the sealing plate 20A is 6 mm² or more.

As illustrated in FIG. 7, the plurality of openings 43c1 and 43c2 are displaced from a region facing the injection hole 22 in the partition walls 43a and 43b. The expression "displaced from the region facing the injection hole" herein includes an aspect in which the openings 43c1 are not present in the region facing the injection hole 22 and an aspect in which only some of the openings 43c1 are present in the region facing the injection hole 22, in the partition walls 43a and 43b. On the other hand, in the method for fabricating the battery 1 described later, the former is more preferable from the viewpoint of reliably in preventing peeling of the separator 36.

The foregoing description has been directed to the spacer 40A. As described above, in the battery 1 according to this preferred embodiment, the spacer 40B is also located on the other side X2 in the long-side direction **X.** As illustrated in FIG. **3****,** the spacer 40B faces the sealing plate 20B and partitions the housing space 3 of the case 70 from the end space 4B on the side of the sealing plate 20B. The spacer 40B has a structure substantially identical to that of the spacer 40A, and thus, detailed description thereof will be omitted. In this preferred embodiment, the structures of the spacers 40A and 40B are the same, but may be different in other preferred embodiments.

### <Method for Fabricating Battery>

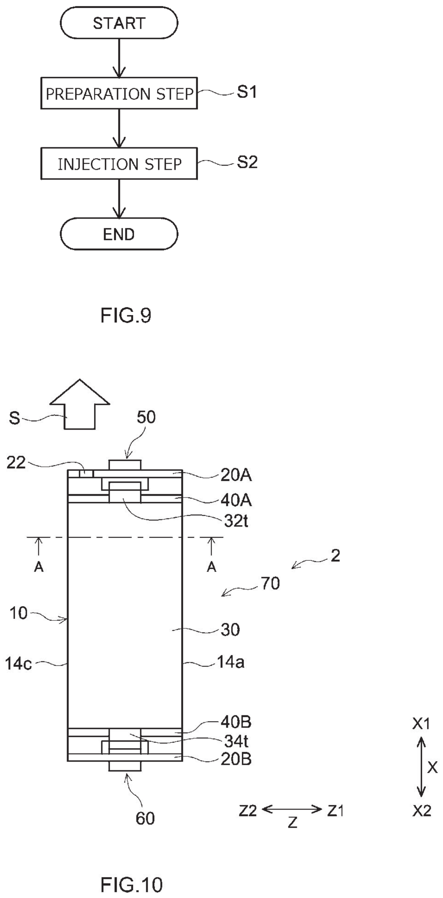

A method for fabricating the battery 1 according to this preferred embodiment will be described below. FIG. 9 is a flowchart depicting a method for fabricating the battery 1 according to one preferred embodiment. FIGS. 10, 12, and 13 are, respectively, a first schematic view, a second schematic view, and a third schematic view for describing an injection step S2 according to one preferred embodiment. FIG. 11 is a schematic view schematically illustrating a cross section taken along line A-A in FIG. 10. The following description of the fabrication method is not intended to limit the fabrication method of the present disclosure to the following fabrication method. Steps described below can be carried out in a different order as necessary. Other steps may be added as necessary as well as the steps described below.

As illustrated in FIG. 9, the method for fabricating the battery 1 according to this preferred embodiment includes a preparation step S1 of preparing a battery assembly 2 and an injection step S2 of injecting the electrolyte E into the battery assembly 2. As illustrated in FIGS. 10, 12, and 13, in the injection step S2, the electrolyte E is injected (poured) through a liquid inlet 120A inserted into the injection hole 22 in a state where the battery assembly 2 is placed with the sealing plate 20A having the injection hole 22 facing upward (toward one side X1 in the long-side direction X in this example). The "opening" herein also refers to a through hole that can serve as a channel for the electrolyte in the partition wall. That is, in the partition wall, openings for other purposes (e.g., openings through which electrode tabs pass or openings through which electrode terminals pass) are not included in the "openings." The steps will be described in detail hereinafter.

### <Preparation Step S1>

As described above, in this step, the battery assembly 2 is prepared. As illustrated in FIG. 10, the battery assembly 2 includes the case 70, the electrode body 30 housed in the case 70, and the spacers 40A and 40B. The preparation step S1 according to this preferred embodiment will be described below.

The battery assembly 2 can be constructed in, for example, the following manner. First, the electrode body 30, the case 70, and the spacers 40A and 40B are assembled. Specifically, the plurality of positive electrode tabs 32t of the electrode body 30 are joined to the positive electrode inner terminal 54. In addition, the plurality of negative electrode tabs 34t and the negative electrode inner terminal 64 are joined. Then, the spacers 40A and 40B are attached to the electrode body 30, and the perimeter thereof is covered with the insulating film 80. Subsequently, the negative electrode outer terminal 62 fixed to the sealing plate 20B and the negative electrode inner terminal 64 are joined. The resulting unit is inserted from one opening 12b of the case body 10. Thereafter, the positive electrode outer terminal 52 fixed to the sealing plate 20A and the positive electrode inner terminal 54 are joined. Then, the sealing plates 20A and 20B are welded to the openings 12a and 12b of the case body 10, respectively. At this time, the end surface 30A of the multilayer structure of the electrode body 30 is located to face the sealing plate 20A. In this preferred embodiment, the sealing plate 20B is also located to face the end surface 30B of the multilayer structure. In this manner, the battery assembly 2 can be assembled.

In the technique disclosed here, the proportion of the total area of the plurality of openings 43c1 and 43c2 to the area of the injection hole 22 (total area of openings / area of injection hole) in the spacer 40A prepared above is 22 or more and 49 or less. The proportion (total area of openings/area of injection hole) may be, for example, 25 or more, 30 or more, or 40 or more. The proportion (total area of openings / area of injection hole) may be, for example, 45 or less.

In this preferred embodiment, the "total area of openings" refers to the total area of a total of 16 openings 43, that is, 12 openings 43c1 in the partition wall 43a and 4 openings 43c2 in the partition wall 43b. The area per one of the openings 43c1 and 43c2 corresponds to the hatched area (43d) in FIG. 7. The "area of an opening" can also be referred to as a void area of the opening. Alternatively, the "area of an opening" can also be referred to as the area of the opening when seen from above. In this preferred embodiment, the "area of injection hole" refers to the area of the injection hole 22 when seen from above. As described above, the area of the injection hole 22 corresponds to the hatched portion (22A) in FIG. 8. The area of the injection hole 22 can also be referred to as an area of a portion of the injection hole 22 into which the electrolyte E flows.

In the technique disclosed here, supposing the area of a cross section of the spacer 40A prepared above along the sealing plate 20A of the case 70 is 100%, the proportion of the total area of the plurality of openings 43c1 and 43c2 (hereinafter referred to simply as an "area proportion of the openings of the spacer") is 8% or more. The opening ratio of the spacer 40A is preferably 10% or more, more preferably 15% or more, from the viewpoint of more suitably reducing the injection time of the electrolyte E. The upper limit of the opening ratio of the spacer 40A is, for example, 20% or less, may be 16% or less.

The "area proportion of the openings of the spacer" can be calculated by (total area of openings / area of cross section along the side wall) × 100%. For example, in this preferred embodiment, the "area of a cross section along the side wall" refers to an area of the cross section of the case 70 along the sealing plate 20A having the injection hole 22. Specifically, the area refers to the area of the cross section taken along line A-A in FIG. 10 (area of the hatched portion in FIG. 11). The cross-sectional area of the case 70, the total cross-sectional area of the plurality of openings 43c1 and 43c2, and the area of the injection hole 22 can be measured by, for example, a computerized numerical control (CNC) image measurement device. As a CNC image measurement device, a commercially available device can be used without any particular limitation.

In the technique disclosed here, supposing the area of the cross section of the spacer 40A prepared above along the sealing plate 20A of the case 70 is 100%, the proportion of the area of the injection hole 22 (hereinafter referred to simply as an "area proportion of the injection hole") is 0.2% or more. The area proportion of the injection hole 22 is preferably 0.3% or more, more preferably 0.4% or more, from the viewpoint of more suitably reducing the injection time of the electrolyte E. The upper limit of the area proportion of the injection hole 22 is, for example, 0.6% or less, may be 0.5% or less.

Although not particularly limited, the average area of the plurality of openings 43c1 and 43c2 is, for example, 10 mm² or more, may be 15 mm² or more. On the other hand, in the injection step S2 described later, from the viewpoint of more suitably achieving both reduction of the injection time and prevention of peeling of the separator 36, the average area of the plurality of openings 43c1 and 43c2 is preferably 20 mm² or more, and 23 mm² or more. The upper limit of the average area of the plurality of openings 43c1 and 43c2 is, for example, 50 mm² or less. On the other hand, from the viewpoint of more suitably obtaining the advantages as described above, the average area is preferably 40 mm² or less, and 30 mm² or less.

The "average area of the openings" herein can refer to a value obtained by dividing the total area of the openings by the number of openings. More specifically, the average area can be calculated by (total area of openings / number of openings). As described above, for example, in this preferred embodiment, the "total area of openings" refers to the total area of a total of 16 openings 43c1 and 43c2, that is, 12 openings 43c1 in the partition wall 43a and 4 openings 43c2 in the partition wall 43b. As described above, "the number of openings" is 16.

Although not particularly limited, the total area of the plurality of openings 43c1 and 43c2 is, for example, 190 mm² or more. On the other hand, in the injection step S2 described later, from the viewpoint of more suitably reducing the injection time, the total area is preferably 200 mm² or more, 230 mm² or more, more preferably 280 mm² or more, even more preferably 400 mm² or more (e.g., 420 mm² or more). The upper limit of the total area of the plurality of openings 43c1 and 43c2 is, for example, 500 mm² or less, 450 mm² or less, or 430 mm² or less.

Although not particularly limited, in the sealing plate 20A, the area of the injection hole 22 is, for example, 5 mm² or more. On the other hand, from the viewpoint of more suitably reducing the injection time, the area of the injection hole 22 is preferably 6 mm² or more, more preferably 8 mm² or more, particularly preferably 12 mm² or more. The upper limit of the area of the injection hole 22 is, for example, 20 mm² or less, may be 15 mm² or less, or 13 mm² or less.

### <Injection Step S2>

As described above, in this step, the electrolyte E is injected into the battery assembly 2. The injection step S2 according to this preferred embodiment will be described below.

First, as illustrated in FIG. 10, the battery assembly 2 is placed with the sealing plate 20A with the injection hole 22 directed upward (toward one side X1 in the long-side direction X in this example). In this preferred embodiment, as illustrated in FIG. 12, the electrolyte E is injected from the injection hole 22 using a hopper 100. More specifically, the electrolyte E is injected from the liquid inlet 120A of the hopper 100 inserted into the injection hole 22. The injection using the hopper 100 can reduce the injection time compared to conventional nozzle types, but the amount of the electrolyte E injected per unit time tends to be large. Accordingly, there were problems such as peeling of the separator 36 of the electrode body 30. In this regard, according to the technique disclosed here, even in the case of injecting the electrolyte E using the hopper 100, peeling of the separator 36 can be suitably prevented.

The hopper 100 is a member that injects the electrolyte E from the injection hole 22 into the battery 1. The shape of the hopper 100 is not particularly limited as long as advantages of the technique disclosed here are obtained. In this preferred embodiment, as illustrated in FIG. 12, a funnel-shaped hopper 100 is used. The hopper 100 includes an electrolyte housing portion 110 and an injection portion 120. The injection portion 120 has a liquid inlet 120A. The electrolyte housing portion 110 is a portion that houses the electrolyte E in this example. The injection portion 120 is a portion that injects the electrolyte E housed in the electrolyte housing portion 110 into the battery 1 from the injection hole 22. The injection portion 120 may be a thin tube as in this preferred embodiment, or in another preferred embodiment, may be a needle. The sizes of the electrolyte housing portion 110 and the injection portion 120 are preferably determined depending on the amount of the electrolyte E to be injected as necessary. In this preferred embodiment, the injection portion 120 includes a cock (not shown) capable of adjusting on/off of injection of the electrolyte E. The hopper 100 may be made of a metal or a resin, for example. Alternatively, the hopper 100 may be a combination of these materials. As the hopper 100, a commercially available material can be used without any particular limitation, for example.

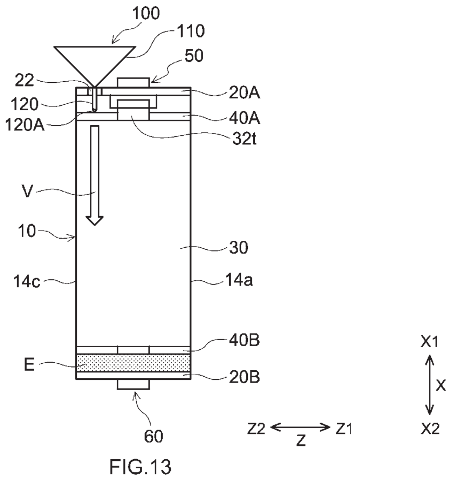

Next, the injection method according to this preferred embodiment will be described. Specifically, first, as illustrated in FIG. 10, the battery 1 is decompressed (see the white arrow S). The condition of the decompression is not particularly limited as long as advantages of the technique disclosed here are obtained. The pressure during the decompression can be in the range from - 50 kPa to -100 kPa (preferably -70 kPa to -100 kPa), for example. The time for the decompression can be set within the range from, for example, 10 seconds to 60 seconds (preferably 20 seconds to 40 seconds). Then, as illustrated in FIG. 12, the liquid inlet 120A of the injection portion 120 of the hopper 100 is inserted into the injection hole 22 of the battery 1. Thereafter, a predetermined amount of the electrolyte E is supplied to the electrolyte housing portion 110. Subsequently, pressurization is performed while opening the cock of the unillustrated injection portion 120 (see the white arrow T). Although not limited to this, the pressure during the pressurization may be within the range from 0.2 MPa to 5 MPa (preferably, 0.5 MPa to 2 MPa), for example. In this manner, the electrolyte E can be injected into the battery 1 (see the white arrow U in FIG. 12 and the white arrow V in FIG. 13).

In one preferred aspect, as in this preferred embodiment, the plurality of openings 43c1 are located at positions displaced from a region facing the injection hole 22 in the partition wall 43a. This configuration can more suitably prevent direct strike of the electrolyte E against the end surface 30A of the multilayer structure of the electrode body 30. Accordingly, peeling of the separator 36 can be more suitably prevented.

The amount of the electrolyte E to be injected is, for example, 100 g or more, may be 150 g or more. On the other hand, in a preferred aspect, the amount of the electrolyte E to be injected is 200 g or more, more preferably 250 g or more, 280 g or more. According to the method for fabricating the battery 1, peeling of the separator 36 can be suitably prevented. Thus, it can be said that large batteries with a large amount of the electrolyte E to be injected as described above, for example, tend to have a longer injection time, and therefore, are suitable as application targets. Although not particularly limited, the upper limit of the amount of the electrolyte E to be injected is, for example, 500 g or less, may be 400 g or less, or 300 g or less. Moreover, although not particularly limited, the viscosity of the electrolyte E to be injected is, for example, from 0.1 mPa·s to 1 mPa·s (preferably, 0.1 mPa·s to 0.5 mPa·s) at 25°C. The viscosity can be measured with a commercially available rotational viscometer, for example. As the water and solvent described above, commercially available products can be used without any particular limitation, for example.

Although not particularly limited, the injection velocity of the electrolyte E is, for example, 10 g/second or more, and from the viewpoint of suitably reducing the injection time, is preferably 20 g/second or more, 30 g/second or more, more preferably 40 g/second or more, 50 g/second or more. The upper limit of the injection velocity of the electrolyte E is, for example, 70 g/second or less, and from the viewpoint of suitably preventing peeling of the separator 36, is preferably 60 g/second or less. Although not particularly limited, in one aspect, the injection time of the electrolyte E is preferably 12 seconds or less, more preferably 10 seconds or less, and even more preferably 9 seconds or less, 8 seconds or less, 5 seconds or less, from the viewpoint of more suitably enhancing productivity of the battery 1.

After the injection step S2 has been completed, the injection hole 22 is completely sealed with the injection plug 24. Then, appropriate treatments such as initial charging and aging are performed, thereby obtaining the battery 1.

The battery 1 can be used for various applications, and suitably used as a power source (drive power source) for a motor mounted on a vehicle such as an automobile or a truck. Although not particularly limited, examples of the type of the vehicle include a plug-in hybrid electric vehicle (PHEV), a hybrid electric vehicle (HEV), and a battery electric vehicle (BEV).

From the viewpoint of enhancing productivity of the battery 1, development of a technique that can achieve both prevention of peeling of the sheet-like separator 36 and reduction of the injection time of the electrolyte E in fabrication of the battery 1 is required. According to the method for fabricating the battery 1 described above, in the injection process S2, the electrolyte E is injected from the injection hole 22 with the spacer 40A located between the sealing plate 20A and the electrode body 30. The method for fabricating the battery 1 described above is characterized by having the proportion (total area of openings / area of injection hole), the area proportion of the openings of the spacer, and the area proportion of the injection hole within appropriate ranges. This enables both prevention of peeling of the sheet-like separator 36 and reduction of the injection time of the electrolyte E. In the battery 1 obtained by the fabrication method described above, peeling of the separator 36 is suitably prevented. Accordingly, the battery 1 can be said to be a high-quality battery.

The spacer 40A with the configuration described above exhibits the following advantages. First, as illustrated in FIG. **6****,** the electrolyte E injected from the injection hole 22 enters over the partition wall 43a. At this time, a portion of the electrolyte E enters through the openings 43c1 of the partition wall 43a. This allows the electrolyte E to be supplied to the end portion on one side Z2 in the height direction Z. A portion of the electrolyte E diffused at the partition wall 43a enters through the passage space 49 that allows the positive electrode inner conductive member A1 to pass therethrough. This allows the electrolyte E to be supplied to a center portion in the height direction Z. Then, the remaining electrolyte E reaches the partition wall 43b along the liquid channel 48 and enters through the openings 43c2 of the partition wall 43b. This allows the electrolyte E to be supplied to the end portion on the other side Z1 in the height direction Z. Since the first spacer 40A has the liquid channel 48 as described above, the electrolyte E can be injected more efficiently throughout the entire height direction Z.

As described above, the spacer 40A includes the first walls 41a and 41b and the second walls 42a, 42b, and 42c. Accordingly, for example, even when an impact is applied to the battery 1 in the long-side direction X, deformation of the spacer 40A can be suitably prevented. In the spacer 40A, the first rib 44, the second rib 46, and the third rib 47 can further restrict deformation of the second walls 42a and 42c inward in the short-side direction Y. The same holds for the spacer 40B. In addition, the spacers 40A and 40B can prevent continuity between the electrode body 30 and the sealing plates 20A and 20B. Furthermore, the spacers 40A and 40B can restrict movement of the electrode body 30 in the long-side direction X. Accordingly, breakage of the electrode body 30 (e.g., electrode tab 30t) can be prevented.

### [Test Examples]

Test examples of the technique disclosed here will be described. The contents of the test examples described below are not intended to limit the technique disclosed herein.

### 1. Preparation of Test Batteries

In this test, nine types of test batteries having different total areas of openings and different areas of the injection hole were fabricated, and the injection time was measured and the presence or absence of peeling of the separator was determined. Fabrication of test batteries of examples will be described hereinafter.

### (Examples 1 to 8)

Batteries as illustrated in FIG. 3 were fabricated as test batteries. Specifically, first, a laminated electrode body (length of 284 mm in the long-side direction × length of 88 mm in the height direction × length of 13 mm in the short-side direction) was produced by stacking multiple sheet-like positive electrodes and sheet-like negative electrodes with sheet-like separators interposed therebetween. In this example, a lithium nickel cobalt manganese composite oxide (LiNi_{1/3}CO_{1/3}Mn_{1/3}O₂) was used as the positive electrode active material. An aluminum foil was used as the positive electrode current collector. On the other hand, graphite was used as the negative electrode active material. A copper foil was used as the negative electrode current collector. A separator with a three-layer structure of PP/PE/PE was used as the separator. Then, two laminated electrode bodies produced as described above were inserted into a rectangular tubular case body (made of aluminum, with a length of 308 mm in the long-side direction, a length of 90 mm in the height direction, and a length of 30 mm in the short-side direction) with spacers attached to the case body. In Examples 1 to 8, spacers with a total opening area and a spacer with an opening area proportion as shown in Table 1 were used. In Examples 1 to 8, the sealing plates including the injection holes with the areas shown in Table 1 were used. The total opening area of the spacer was varied by increasing or decreasing the number of openings in the spacer. The average opening area of the spacers was 23.7 mm². Then, the openings on both sides of the case body were sealed using sealing plates.

### (Example 9)

A test battery of Example 7 was fabricated in a manner similar to Examples 1 to 6 and 8 to 10 except for inserting two laminated electrode bodies into the case body without spacers.

### 2. Measurement of Injection Time

First, as illustrated in FIG. 10, the inside of each test battery was decompressed for 30 seconds at -96 kPa or less. Then, as illustrated in FIG. 12, the hopper is attached to the injection hole, and the entire amount of an electrolyte was supplied to the electrolyte housing portion of the hopper. In Examples 1 to 9, 289g of the electrolyte was supplied to the electrolyte housing portion. Thereafter, as illustrated in FIG. 13, the injection portion was opened, and while the electrolyte housing portion was pressurized at 0.8 MPa, the electrolyte was injected into each test battery. The time from the start of injection of the electrolyte until the electrolyte in the electrolyte housing portion is depleted was measured as an injection time. The result is shown in the "Injection Time" column in Table 1. When the "injection time" is 12 seconds or less (preferably 10 seconds or less), it is determined that the injection time is shortened. As the electrolyte, a mixed solvent (nonaqueous electrolyte) including ethylene carbonate (EC), dimethyl carbonate (DMC), and ethyl methyl carbonate (EMC) in a volume ratio of 3:4:3 was prepared. A solution in which LiPF₆ as a supporting electrolyte was dissolved at a concentration of 1.0 mol/L was used.

### 3. Determination of Presence/Absence of Peeling of Separator

First, each test battery after the injection was disassembled. Then, the electrode body was extracted from each test battery, and it was visually determined whether the separator of the electrode body was peeled or not. The result is shown in the "Presence/Absence of Peeling of Separator" column in Table 1. In Table 1, "×" indicates that peeling of the separator has been observed in the electrode body, while "O" means that peeling of the separator has not been observed in the electrode body.

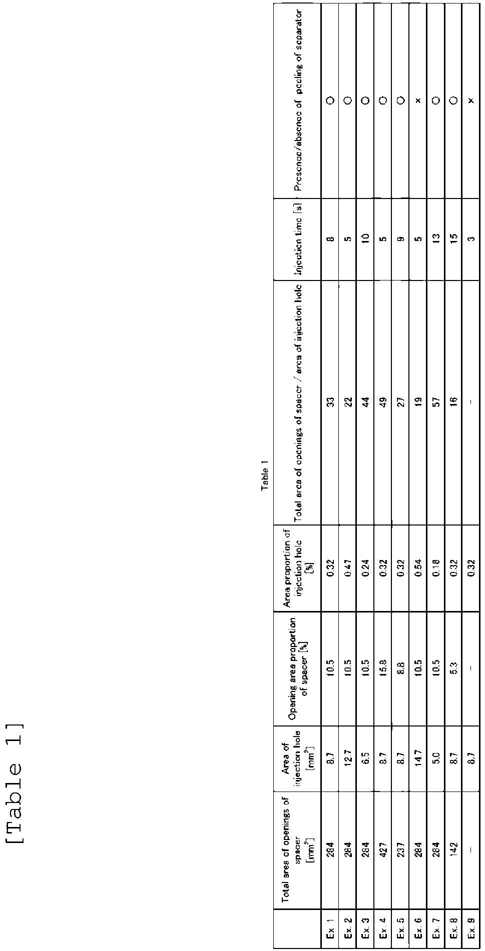

As illustrated in Table 1, in Examples 1 to 5 in which the proportion (total area of openings of spacer / area of injection hole) is 22 or more and 49 or less, the area proportion of the injection hole is 0.2% or more, and the area proportion of the openings of the spacer is 8% or more, it is determined that the injection time is reduced and peeling of the separator is suitably prevented. On the other hand, in Examples 6 to 8 in which the (total area of openings of spacer to area of injection hole) is out of the above range and in Example 9 with no spacers, it is determined that reduction of the injection time and prevention of peeling of the separator are not achieved simultaneously.

From Examples 1 to 5, it is determined that in a case where the above conditions are satisfied, the total area of the openings of the spacer is preferably 200 mm² or more (for example, 230 mm² or more). Furthermore, from Examples 1 to 5, it is determined that in the case where the above conditions are satisfied, the area of the injection hole is preferably 6 mm² or more.

It is also determined that peeling of the separator can be suitably prevented even when the electrolyte is injected using a hopper. The use of the hopper can suitably shorten the injection time compared to conventional nozzle types.

The preferred embodiment of the technique disclosed here has been described above. However, the above description is merely an example and does not limit the scope of the claims. The techniques described in claims include various modifications and changes of the exemplified specific examples in the above description.

For example, in the above test examples, the tests were conducted using large batteries, but the technique disclosed here can of course be applied to batteries other than large batteries.

In the preferred embodiment described above, the electrode body 30 is a laminated electrode body, but is not limited to this example. In another preferred embodiment, the electrode body 30 may be a wound electrode body in which a laminated structure in which a plurality of sheet-like positive electrodes 32 and a plurality of sheet-like negative electrodes 34 are laminated with sheet-like separators 36 interposed therebetween is wound. The number of the electrode bodies 30 included in the battery 1 may be two as in this preferred embodiment, or one or three or more in other preferred embodiments. In yet another preferred embodiment, the electrode body 30 may not include the positive electrode tab 32t and the negative electrode tab 34t.

In the preferred embodiment described above, the shape of the case 70 is a substantially rectangular parallelepiped, but is not particularly limited unless otherwise specified. For example, the shape of the case 70 may be various shapes such as a cylindrical shape. In the case where the case 70 is cylindrical, the electrode body 30 may be a cylindrical wound electrode body housed in the case 70. Further, each of the spacers 20A and 20B may be a cylindrical member located between a side wall of the case 70 and the electrode body 30 in the cylindrical case 70.

For example, in the preferred embodiment described above, the sealing plate 20A including the positive electrode terminal 50 has the injection hole 22, but the present disclosure is not limited to this example. In another preferred embodiment, the sealing plate 20B including the negative electrode terminal 60 may have the injection hole 22.

For example, in the preferred embodiment described above, the sealing plates 20A and 20B respectively include the positive electrode terminal 50 and the negative electrode terminal 60, but the present disclosure is not limited to this example. In another preferred embodiment, one of the sealing plates 20A and 20B may include both the positive electrode terminal 50 and the negative electrode terminal 60. In this case, the sealing plate including the positive electrode terminal 50 and the negative electrode terminal 60 may have the injection hole 22, for example. Alternatively, in another embodiment, the battery may include: a package including a bottom wall, a pair of first side walls extending from the bottom wall and facing each other, a pair of second side walls extending from the bottom wall and facing each other, and an opening facing the bottom wall; and a sealing plate that seals the opening of the package. In this case, the sealing plate may include the electrode terminals and the injection holes, for example.

For example, in the preferred embodiment described above, the spacer 40A includes the first walls 41a and 41b, the second walls 42a, 42b, and 43c, and the partition walls 43a and 43b, but the shape of the spacers is not limited to this example.

For example, in the preferred embodiment, the electrolyte E is injected from the injection hole 22 using the hopper, but the present disclosure is not limited to this example. In another preferred embodiment, the electrolyte E may be injected using a nozzle. On the other hand, from the viewpoint of suitably shortening the injection time, the hopper capable of injecting a large amount of the electrolyte E at a time is more preferably used.

As described above, specific aspects of the technique disclosed herein include the following items:
Item 1:
   A method for fabricating a power storage device, the method including:
   a preparation step of preparing a power storage device assembly; and
   an injection step of injecting an electrolyte into the power storage device assembly, wherein
   the power storage device assembly includes
      a case,
      an electrode body housed in the case, and
      a spacer,
   the case includes a housing space housing the electrode body, and a side wall having an injection hole through which the electrolyte is injected,
   the electrode body has a multilayer structure in which a sheet-like positive electrode and a sheet-like negative electrode are stacked with a sheet-like separator interposed therebetween,
   an end surface of the multilayer structure faces the side wall in the housing space,
   the spacer
      is located between the side wall and the electrode body in the case, and
      includes a partition wall facing the side wall and partitioning the housing space from an end space on a side of the side wall,
   the partition wall includes a plurality of openings each penetrating the partition wall,
   a proportion of a total area of the plurality of openings to an area of the injection hole (total area of openings /area of inj ection hole) is 22 or more and 49 or less,
   supposing an area of a cross section of the case along the s ide wall is 100%, the proportion of the total area of the pluralit y of openings is 8 % or more, and
   supposing the area of the cross section of the case along the side wall is 100%, a proportion of the area of the injection hole is 0.2 % or more, and
   in the injection step, the electrolyte is injected from a liquid inlet inserted into the injection hole in a state where the power storage device assembly is placed with the side wall having the injection hole facing upward.
Item 2:
   In the method of Item 1, in the injection step, the electrolyte is injected using a hopper.
Item 3:
   The method of Item 1 or 2, an amount of the electrolyte is 200 g or more.
Item 4:
   In the method of any one of Items 1 to 3, in the spacer, the total area of the plurality of openings is 200 mm² or more.
Item 5:
   In the method of any one of Items 1 to 4, in the side wall, the area of the injection hole is 6 mm² or more.
Item 6:
   In the method of any one of Items 1 to 5, the plurality of openings are displaced from a region facing the injection hole in the partition wall.
Item 7:
   A power storage device includes:
   an electrode body;
   an electrolyte;
   a case housing the electrode body and the electrolyte; and
   a spacer, wherein
   the case includes a housing space housing the electrode body, and a side wall having an injection hole through which the electrolyte is injected,
   the electrode body has a multilayer structure in which a sheet-like positive electrode and a sheet-like negative electrode are stacked with a sheet-like separator interposed therebetween,
   an end surface of the multilayer structure faces the side wall in the housing space,
   the spacer
      is located between the side wall and the electrode body in the case, and
      includes a partition wall facing the side wall and partitioning the housing space from an end space on a side of the side wall,
   the partition wall includes a plurality of openings each penetrating the partition wall,
   a proportion of a total area of the plurality of openings to an area of the injection hole (total area of openings /area of inj ection hole) is 22 or more and 49 or less,
   supposing an area of a cross section of the case along the s ide wall is 100%, the proportion of the total area of the pluralit y of openings is 8 % or more, and
   supposing the area of the cross section of the case along the side wall is 100%, a proportion of the area of the injection hole is 0.2 % or more.
Item 8:
   In the power storage device of Item 7, an amount of the electrolyte is 200 g or more.
Item 9:
   In the power storage device of Item 7 or 8, in the spacer, the total area of the plurality of openings is 200 mm2 or more.
Item 10:
   In the power storage device of any one of Items 7 to 9, in the side wall, the area of the injection hole is 6 mm² or more.
Item 11:
   In the power storage device of any one of Item 7 to 10, the plurality of openings are displaced from a region facing the injection hole in the partition wall.

## Claims

1. A method for fabricating a power storage device (1), the method comprising:
a preparation step (S1) of preparing a power storage device assembly (2); and
an injection step (S2) of injecting an electrolyte (**E**) into the power storage device assembly (2), wherein
the power storage device assembly (2) includes
a case (70),
an electrode body (30) housed in the case (70), and
a spacer (40A),
the case (70) includes a housing space (3) housing the electrode body (30), and a side wall (20A) having an injection hole (22) through which the electrolyte (**E**) is injected,
the electrode body (30) has a multilayer structure in which a sheet-like positive electrode (32) and a sheet-like negative electrode (34) are stacked with a sheet-like separator (36) interposed therebetween,
an end surface of the multilayer structure (30A) faces the side wall (20A) in the housing space (3),
the spacer (40A)
is located between the side wall (20A) and the electrode body (30) in the case (70), and
includes a partition wall (43a, 43b) facing the side wall (20A) and partitioning the housing space (3) from an end space on (4A) a side of the side wall (20A),
the partition wall (43a, 43b) includes a plurality of openings (43c1, 43c2) each penetrating the partition wall (43a, 43b),
a proportion of a total area of the plurality of openings (4 3c1, 43c2) to an area of the injection hole (22) (total area of ope nings /area of injection hole) is 22 or more and 49 or less,
supposing an area of a cross section of the case (70) along the side wall (20A) is 100%, the proportion of the total area of th e plurality of openings (43c1, 43c2) is 8 % or more, and
supposing the area of the cross section of the case (70) along the side wall (20A) is 100%, a proportion of the area of the injection hole (22) is 0.2 % or more, and
in the injection step (S2), the electrolyte (**E**) is injected from a liquid inlet (120A) inserted into the injection hole (22) in a state where the power storage device assembly (2) is placed with the side wall (20A) having the injection hole (22) facing upward.

2. The method according to claim 1, wherein in the injection step (S2), the electrolyte (**E**) is injected using a hopper (100).

3. The method according to claim 1 or 2, wherein an amount of the electrolyte (**E**) is 200 g or more.

4. The method according to any one of claims 1 to 3, wherein in the spacer (40A), the total area of the plurality of openings (43c1, 43c2) is 200 mm² or more.

5. The method according to any one of claims 1 to 4, wherein in the side wall (20A), the area of the injection hole (22) is 6 mm² or more.

6. The method according to any one of claims 1 to 5, wherein the plurality of openings (43c1, 43c2) are displaced from a region facing the injection hole (22) in the partition wall (43a, 43b).

7. A power storage device (1) comprising:
an electrode body (30);
an electrolyte (**E**);
a case (70) housing the electrode body (30) and the electrolyte (**E**); and
a spacer (40A), wherein
the case (70) includes a housing space (3) housing the electrode body (30), and a side wall (20A) having an injection hole (22) through which the electrolyte (**E**) is injected,
the electrode body (30) has a multilayer structure in which a sheet-like positive electrode (32) and a sheet-like negative electrode (34) are stacked with a sheet-like separator (36) interposed therebetween,
an end surface of the multilayer structure (30A) faces the side wall (20A) in the housing space (3),
the spacer (40A)
is located between the side wall (20A) and the electrode body (30) in the case (70), and
includes a partition wall (43a, 43b) facing the side wall (20A) and partitioning the housing space (3) from an end space (4A) on a side of the side wall (20A),
the partition wall (43a, 43b) includes a plurality of openings (43c1, 43c2) each penetrating the partition wall (43a, 43b),
a proportion of a total area of the plurality of openings (4 3c1, 43c2) to an area of the injection hole (22) (total area of ope nings /area of injection hole) is 22 or more and 49 or less,
supposing an area of a cross section of the case (70) along the side wall (20A) is 100%, the proportion of the total area of th e plurality of openings (43c1, 43c2) is 8 % or more, and
supposing the area of the cross section of the case (70) along the side wall (20A) is 100%, a proportion of the area of the injection hole (22) is 0.2 % or more.

8. The power storage device (1) according to claim 7, wherein an amount of the electrolyte (E) is 200 g or more.

9. The power storage device (1) according to claim 7 or 8, wherein in the spacer (40A), the total area of the plurality of openings (43c1, 43c2) is 200 mm² or more.

10. The power storage device (1) according to any one of claims 7 to 9, wherein in the side wall (20A), the area of the injection hole (22) is 6 mm² or more.

11. The power storage device (1) according to any one of claims 7 to 10, wherein the plurality of openings (43c1, 43c2) are displaced from a region facing the injection hole (22) in the partition wall (43a, 43b).
